# NEUE EUROPÄISCHE PATENTSCHRIFT

(11) **EP 2 738 458 B2**
(45) Veröffentlichungstag und Bekanntmachung des Hinweises auf die Entscheidung über den Einspruch: **24.05.2023**
(45) Hinweis auf die Patenterteilung: 15.01.2020
(21) Anmeldenummer: 12008052.8
(22) Anmeldetag: 30.11.2012
(51) Int. Cl.: F22B 33/18, F22B 35/00, F22G 1/16, F01K 3/18

(54) **Kraftwerksanlage und Verfahren zum Erzeugen von elektrischem Strom**
Power plant and method for generating electric power
Centrale électrique et procédé de génération de courant électrique

(43) Veröffentlichungstag der Anmeldung: 04.06.2014
(73) Patentinhaber: Lumenion AG, 6301 Zug (CH)
(72) Erfinder: Zwinkels, Andrew, 10435 Berlin (DE)
(74) Vertreter: Ridderbusch, Oliver

(56) Entgegenhaltungen:
- EP-A1- 1 992 794
- EP-A1- 1 992 794
- WO-A1-98/58156
- WO-A1-2011/093854
- WO-A1-2011/110237
- WO-A1-2011/145917
- WO-A2-2012/007068
- WO-A2-2012/007196
- WO-A2-2012/007216
- KR-A- 20090 115 084
- US-A1- 2009 056 341
- US-A1- 2009 056 341
- US-A1- 2010 071 634
- US-A1- 2010 313 564
- US-A1- 2010 313 564
- US-A1- 2011 011 057
- US-A1- 2011 011 057
- Sylvain Quoilin et al: "Dynamic modeling and optimal control strategy of waste heat recovery Organic Rankine Cycles", Applied Energy, vol. 88, no. 6, June 2011 (2011-06), pages 2183-2190,

## Beschreibung

Die vorliegende Erfindung betrifft in einem ersten Aspekt eine Gas- oder Kohlekraftwerksanlage zur Erzeugung elektrischen Stroms gemäß dem Oberbegriff des Anspruchs 1. In einem weiteren Gesichtspunkt betrifft die Erfindung ein Verfahren zum Erzeugen von elektrischem Strom nach dem Oberbegriff des Anspruchs 13.

Eine bekannte Kraftwerksanlage weist eine Brennereinheit auf, in welcher durch Verbrennen eines Brennstoffs thermische Energie erzeugbar ist, eine Turbineneinheit, in welcher mit der thermischen Energie eine Drehbewegung erzeugbar ist, und eine Generatoreinheit, welche zum Erzeugen von elektrischem Strom von der Drehbewegung angetrieben ist.

Bei einem gattungsgemäßen Verfahren zum Erzeugen von elektrischem Strom wird in einer Brennereinheit ein Brennstoff verbrannt und thermische Energie erzeugt, es wird in einer Turbineneinheit die thermische Energie in eine Drehbewegung umgewandelt, es wird eine Generatoreinheit von der Drehbewegung angetrieben und hierdurch wird elektrischer Strom erzeugt.

In zahlreichen Ländern wird elektrischer Strom hauptsächlich mit Kraftwerksanlagen der vorgenannten Art produziert. Die genutzten Brennstoffe können je nach Kraftwerksanlage verschiedene, insbesondere fossile, Energieträger umfassen. Beispielsweise können Kohle, Gas oder Öl als Brennstoff verwendet werden.

Ein wachsender Anteil der insgesamt erzeugten Strommenge wird durch erneuerbare Energiequellen abgedeckt. Insbesondere werden Sonnenenergie und Windenergie verstärkt zur Stromerzeugung genutzt. Die hierbei erzeugte Energiemenge schwankt zeitlich jedoch stark. Möglichkeiten, die hierbei anfallende überschüssige elektrische Energie in größerem Umfang zu speichern, bestehen kaum. Daraus folgen schwerwiegende Probleme, in welcher Weise überschüssige elektrische Energie verwendet werden soll. Nicht selten muss in Zeiten der verstärkten Stromerzeugung sogar für die Abnahme von elektrischer Energie gezahlt werden.

Prinzipiell ist denkbar, während einer verstärkten Stromerzeugung durch Sonnenoder Windenergie die vorgenannte Kraftwerksanlage herunterzufahren. Ein Herunterfahren und ein erneutes Anfahren der Kraftwerksanlage sind jedoch mit hohen Materialbelastungen verbunden und können bei bekannten Kraftwerksanlagen nur langsam durchgeführt werden. Diese Geschwindigkeiten reichen nicht aus, um auf eine schwankende Windmenge oder Sonneneinstrahlung effektiv reagieren zu können.

So wird in EP 1 992 794 A1 eine Kraftwerksanlage mit einer Verbrennungskraftmaschine, einer Dampfturbine und einer Generatoreinheit beschrieben, bei welcher ein Betriebsstart schneller möglich sein soll, indem Restwärme der Dampfturbinenanlage genutzt wird. Im Rahmen dessen kann auch eine elektrische Beheizung vorgesehen sein. Diese elektrische Energie wird zu Ende einer Betriebspause genutzt, während der Generator ohne Last mitläuft.

US 2010/0313564 A1 beschreibt eine Kraftwerksanlage mit einer Brennereinheit, einer Turbineneinheit und einer Generatoreinheit. Bevor die Generatoreinheit mit einem externen Stromnetz synchronisiert wird, treten unerwünscht hohe Temperaturen auf. Um diese hohen Temperaturen während der Startphase, also bevor die Kraftwerksanlage erzeugten Strom ausgibt, zu verringern, werden Widerstände angeschlossen. Dadurch werden auch Temperaturschwankungen verringert.

Weitere Kraftwerksanlagen zur Erzeugung elektrischen Stroms mit einer Brennereinheit, einer Turbineneinheit und einer Generatoreinheit sind in US 2009/0056341 A1 und in US 2011/0011057 A1 beschrieben.

Als eine Aufgabe der Erfindung kann daher erachtet werden, ein Verfahren zum Erzeugen elektrischen Stroms und eine Gas- oder Kohlekraftwerksanlage anzugeben, welche eine effektive Anpassung an Schwankungen in der verfügbaren Menge elektrischen Stroms ermöglichen.

Diese Aufgabe wird durch die Gas- oder Kohlekraftwerksanlage mit den Merkmalen des Anspruchs 1 und durch das Verfahren mit den Merkmalen des Anspruchs 13 gelöst.

Vorteilhafte Varianten der erfindungsgemäßen Kraftwerksanlage und des erfindungsgemäßen Verfahrens sind Gegenstand der abhängigen Ansprüche und werden in der folgenden Beschreibung erläutert.

Bei der Kraftwerksanlage der oben genannten Art ist erfindungsgemäß vorgesehen, dass zum Erzeugen der thermischen Energie zusätzlich zur Brennereinheit eine elektrische Heizeinheit vorhanden ist, durch welche elektrische Energie in thermische Energie zum Antreiben der Turbineneinheit wandelbar ist.

Bei dem Verfahren der oben beschriebenen Art wird erfindungsgemäß die thermische Energie zusätzlich zur Brennereinheit durch eine elektrische Heizeinheit erzeugt, durch welche elektrische Energie in thermische Energie zum Antreiben der Turbineneinheit gewandelt wird.

Als eine grundlegende Idee der Erfindung kann angesehen werden, elektrische Energie zum Antreiben einer Turbineneinheit und einer damit verbundenen Generatoreinheit zu nutzen. Hierzu wird die elektrische Energie in thermische Energie umgewandelt. Dadurch kann eingestellt werden, zu welchen Anteilen die Turbineneinheit durch thermische Energie von der Brennereinheit und thermische Energie von der elektrischen Heizeinheit angetrieben wird.

Als besonderer Vorteil ist es hierdurch möglich, die Menge des Brennstoffs, die der Brennereinheit zugeführt wird, zu variieren, ohne dass hierdurch die Turbineneinheit und die Generatoreinheit wesentlich beeinflusst werden. Dadurch wird es möglich, dass die momentan verbrannte Brennstoffmenge schnell variiert werden kann. Somit kann bei einem Überangebot an elektrischer Energie die Menge des momentan verbrannten Brennstoffs rasch angepasst werden.

Vorteilhafterweise kann also auch in Zeiten einer verstärkten Stromerzeugung durch Wind- oder Sonnenenergie der verfügbare Strom sinnvoll genutzt werden. Im Vergleich zu herkömmlichen Kraftwerksanlagen kann in solchen Fällen erreicht werden, dass im Ergebnis die noch vorbleibende Menge an Brennstoff höher ist. Daher kann die erfindungsgemäße Kraftwerksanlage auch als ein Energiespeicher bezeichnet werden. Bei einem Überangebot an elektrischer Energie kann Energie gespeichert werden, indem weniger Brennstoff verbraucht wird. Gegenüber bekannten Kraftwerksanlagen wird im Gesamten auch die Menge an ausgestoßenem CO₂ reduziert.

Erfindungsgemäß ist eine Steuereinheit vorgesehen, welche bei einem Überangebot an elektrischer Energie eine Heizleistung der elektrischen Heizeinheit erhöht und eine Heizleistung der Brennereinheit herabsetzt. Wann ein Überangebot vorliegt, kann entweder manuell der Steuereinheit eingegeben werden oder auch anhand bestimmter Kriterien automatisch von der Steuereinheit bestimmt werden, beispielsweise mittels eines momentanen Strompreises. Mit der Umwandlung von elektrischer Energie in thermische Energie, weiter in eine Drehbewegung und schließlich mit der Generatoreinheit erneut in elektrische Energie sind zwar zwangsläufig Umwandlungsverluste verbunden. Weil aber hiermit verfügbarer Brennstoff gespart wird, wird gleichwohl ein großer Anteil der verfügbaren elektrischen Energie sinnvoll genutzt.

In entsprechender Weise kann die Steuereinheit die Heizleistung der elektrischen Heizeinheit verringern oder die Heizeinheit ausschalten, wenn kein Überangebot an elektrischer Energie mehr vorliegt oder wenn der Strompreis steigt. Mit sinkender Heizleistung der elektrischen Heizeinheit kann die Heizleistung der Brennereinheit wieder erhöht werden.

Vorzugsweise sind durch die Steuereinheit die Heizleistungen von Heizeinheit und Brennereinheit voneinander abhängig steuerbar, so dass die Turbineneinheit mit einer gleichbleibenden oder einer im Wesentlichen gleichbleibenden Gesamtleistung betreibbar ist. Insbesondere kann die Gesamtleistung durch die Steuereinheit innerhalb vorgebbarer Grenzen gleichbleibend sein. Zudem können die Heizleistungen abhängig von einer Füllmenge eines Speicherbehälters gesteuert werden, welcher im Späteren näher beschrieben wird. Alternativ zu einer gleichbleibenden Gesamtleistung können mit der Steuereinheit die Heizleistungen von Heizeinheit und Brennereinheit auch so steuerbar sein, dass eine vorgegebene Änderungsrate der Gesamtleistung der Turbineneinheit nicht überschritten wird.

Zweckmäßigerweise kann die Brennereinheit eine Verbrennungskammer zum Verbrennen des Brennstoffs aufweisen. Dabei kann die Verbrennungskammer mehrere Einlassanschlüsse aufweisen, wobei an mindestens einen der Einlassanschlüsse eine Zuführleitung für Brennstoff angeschlossen ist. Bei einer bevorzugten Ausführung der erfindungsgemäßen Kraftwerksanlage ist über mindestens einen anderen der Einlassanschlüsse ein Zuführen eines von der elektrischen Heizeinheit erhitzten Mediums ermöglicht. In der Verbrennungskammer kann eine Verringerung der thermischen Energie, die durch eine reduzierte Brennstoffzufuhr bedingt ist, somit teilweise oder vollständig ausgeglichen werden, indem von der elektrischen Heizeinheit verstärkt thermische Energie eingeleitet wird. Die Temperatur in der Verbrennungskammer ist dadurch weitgehend unabhängig von Änderungen der zugeführten Brennstoffmenge. Vorteilhafterweise werden dadurch Belastungen der Verbrennungskammer reduziert, die durch Temperaturschwankungen hervorgerufen werden. Hierdurch können schnellere Änderungen einer momentan verbrannten Brennstoffmenge realisiert werden.

Hierzu werden bevorzugt durch die Steuereinheit die zugeführte Menge an Brennstoff und die Menge des Mediums, das in der elektrischen Heizeinheit erhitzt wird, abhängig voneinander gesteuert, so dass eine Temperatur in der Verbrennungskammer im Wesentlichen konstant ist. Insbesondere kann durch die Steuereinheit eingestellt werden, dass die Temperatur bei einer Verringerung der Brennstoffzufuhr durch eine verstärkte Heizleistung der elektrischen Heizeinheit innerhalb vorgebbarer Grenzwerte gleichbleibend ist und/oder eine vorgegebene Temperaturänderungsrate nicht überschritten wird.

Die elektrische Heizeinheit kann in prinzipiell beliebiger Weise gebildet sein, solange durch elektrische Energie ein Medium erhitzt wird. Bei diesem kann es sich um eine Flüssigkeit oder ein Gas handeln. Bevorzugt weist die elektrische Heizeinheit eine Plasmafackel zum Erhitzen eines Mediums auf, über welches die Turbineneinheit antreibbar ist. Bei einer Plasmafackel wird ein Gas in ein Plasma umgewandelt und das Plasma wird mit Hilfe eines elektrischen Feldes beschleunigt, wodurch dessen thermische Energie steigt. Vorteilhafterweise können hierdurch in schneller Weise Temperaturen erreicht werden, die ähnlich einer Temperatur in der Verbrennungskammer sind. Zudem kann eine Plasmafackel kompakt gebaut sein und dadurch für eine Nachrüstung herkömmlicher Kraftwerksanlagen geeignet sein.

Bevorzugt ist die Plasmafackel an einem der Einlassanschlüsse der Verbrennungskammer angeordnet. Dadurch wird das von der Plasmafackel erhitzte Medium direkt in die Verbrennungskammer ausgegeben. Wärmeverluste werden dadurch gegenüber dem Fall vermieden, dass die Plasmafackel und die Verbrennungskammer räumlich voneinander beabstandet sind. Prinzipiell können auch andere Ausgestaltungen von elektrischen Heizeinheiten an einem der Einlassanschlüsse angeordnet sein.

Variablere Einsatzmöglichkeiten werden erreicht, wenn ein Einlassanschluss für eine Zuführleitung von Brennstoff und ein Einlassanschluss für eine Verbindung mit der elektrischen Heizeinheit gleich gebildet sind. Vorteilhafterweise können hierdurch herkömmliche Kraftwerksanlagen in leichterer Weise nachgerüstet werden. Hierzu kann es prinzipiell ausreichen, an einen der Einlassanschlüsse der Verbrennungskammer anstelle einer Zuführleitung von Brennstoff eine Plasmafackel oder eine andere elektrische Heizeinheit anzuschließen. Weiterhin erlaubt diese Ausführung eine größere Variabilität in der zugeführten Brennstoffmenge und der Menge an thermischer Energie, die über die elektrische Heizeinheit zugeführt wird. Hierzu können Verbindungen der Einlassanschlüsse mit entweder der Zuführleitung von Brennstoff oder mit Plasmafackeln variabel geändert werden.

Diese Ausführung ist besonders vorteilhaft, wenn mehrere elektrische Heizeinheiten vorgesehen sind. Außer einer parallelen Anordnung der elektrischen Heizeinheiten kann auch eine serielle Anordnung vorgesehen sein. Dadurch wird der mögliche Temperaturbereich vergrößert, auf den ein zu erhitzendes Medium erwärmt werden kann.

Die Heizleistung und/oder eine Temperatur des Mediums, das mit der elektrischen Heizeinheit erhitzt werden soll, kann besonders flexibel eingestellt werden, wenn die Heizeinheit kaskadenartig angeordnete Heizelemente aufweist, die über die Steuereinheit einzeln ansteuerbar sind. Unter einer kaskadenartigen Anordnung kann verstanden werden, dass die entsprechenden Heizelemente neben- oder hintereinander angeordnet sind. Indem sie einzeln ansteuerbar, das heißt ein- und ausschaltbar, sind, kann eine Heizleistung in einfacher Weise variiert werden.

Alternativ oder zusätzlich zu der Plasmafackel kann die elektrische Heizeinheit zum Erhitzen eines Mediums auch Induktionsmittel aufweisen. Bevorzugt sind die Induktionsmittel mit der Steuereinheit durch Verändern eines magnetischen Widerstands an den Induktionsmitteln steuerbar. Die Induktionsmittel können beispielsweise eine Spule umfassen. Diese erzeugt ein Magnetfeld, welches über ein Leitmaterial zu dem zu erhitzenden Medium geführt wird. An dem Leitmaterial kann die Steuereinheit einen Luftspalt variieren, wodurch der magnetische Widerstand eingestellt wird. Dadurch kann die Leistung, die dem zu erhitzenden Medium zugeführt wird, in einfacher Weise gesteuert werden.

Mit Schwankungen in der verfügbaren elektrischen Energie kann noch effektiver umgegangen werden, wenn ein Speicherbehälter vorgesehen ist. In diesem ist ein Medium speicherbar, das von der elektrischen Heizeinheit erhitzt worden ist. Eine Abgabeleitung ist vorgesehen, mit welcher das erhitzte Medium aus dem Speicherbehälter zu der Verbrennungskammer und/oder der Turbineneinheit leitbar ist. Vorteilhafterweise kann hierdurch die Steuereinheit bei einem Überangebot an elektrischer Energie ein zusätzliches Speichern der überschüssigen elektrischen Energie als thermische Energie in dem Speicherbehälter steuern.

Als ein weiterer Vorteil kann der Speicherbehälter der Überbrückung einer vorübergehenden Unterbrechung der Aufnahme von elektrischer Energie durch die elektrische Heizeinheit dienen. Hierzu kann die Steuereinheit eine Abgabe des erhitzten Mediums aus dem Speicherbehälter veranlassen, wenn eine Heizleistung der elektrischen Heizeinheit reduziert wird. Dies kann der Fall sein, sobald kein Überangebot an elektrischer Energie mehr verfügbar ist.

Bevorzugt ist mit der Steuereinheit variabel einstellbar, ob ein erhitztes Medium von der elektrischen Heizeinheit zu dem Speicherbehälter oder zu der Verbrennungskammer oder Turbine geleitet wird. Zum Leiten zu der Verbrennungskammer oder Turbine kann das erhitzte Medium insbesondere von der elektrischen Heizeinheit zu der Abgabeleitung des Speicherbehälters, die zu der Verbrennungskammer oder Turbine führt, geleitet wird.

Durch den Speicherbehälter kann vorteilhafterweise auch vermieden werden, dass rasche Anpassungen der zugeführten Brennstoffmenge erforderlich sind, wenn die Heizleistung der elektrischen Heizeinheit variiert wird. So kann vorgesehen sein, dass die Steuereinheit bei einer Änderung der Heizleistung der elektrischen Heizeinheit zunächst das erhitzte Medium in den Speicherbehälter ein- oder ausleitet und dabei die Brennstoffmenge, die der Brennereinheit zugeführt wird, konstant hält. Hierdurch kann ebenfalls die Turbineneinheit mit einer im Wesentlichen gleichbleibenden Gesamtleistung betrieben werden.

Ein Erhöhen der Brennstoffmenge, die der Brennereinheit zugeführt wird, erfolgt hier vorteilhafterweise nicht bereits, wenn die Heizleistung der elektrischen Heizeinheit verringert wird. Vielmehr wird die Brennstoffmenge erst erhöht, wenn eine Füllmenge im Speicherbehälter unter einen vorgebbaren Schwellwert oder auf null sinkt.

Bevorzugt ist die Steuereinheit dazu eingerichtet, bei einer Reduzierung der Heizleistung der elektrischen Heizeinheit unter einen vorgebbaren Schwellwert oder auf null ein Weitergeben des erhitzten Mediums aus dem Speicherbehälter zu veranlassen.

Ebenso wird ein Weitergeben veranlasst, wenn ein vorgegebener maximaler Füllgrad des Speicherbehälters erreicht wird. In diesem Fall wird gleichzeitig die Brennstoffmenge reduziert, die der Brennereinheit zugeführt wird. Dadurch kann die Turbineneinheit weiterhin mit einer im Wesentlichen gleichbleibenden Gesamtleistung betrieben werden. Eine Änderung der Heizleistung der elektrischen Heizeinheit ist in diesem Fall nicht erforderlich.

Ein besonders leichtes Nachrüsten von herkömmlichen Kraftwerksanlagen wird bei einer Ausführung ermöglicht, bei welcher vorgesehen ist, dass die Brennereinheit und die elektrische Heizeinheit jeweils eine Auslassleitung aufweisen, dass die beiden Auslassleitungen zu einer gemeinsamen Auslassleitung miteinander verbunden sind und dass die gemeinsame Auslassleitung zu der Turbineneinheit führt. Bei dieser Ausführung sind vorteilhafterweise keine Änderungen an der Brennereinheit und der Turbineneinheit einer herkömmlichen Kraftwerksanlage erforderlich. Vielmehr ist es im Wesentlichen ausreichend, dass die elektrische Heizeinheit mit der Auslassleitung der Brennereinheit verbunden wird.

Weitere Merkmale und Vorteile werden mit Bezug auf die beigefügten schematischen Figuren beschrieben. Hierin zeigen:
- Fig. 1: eine schematische Darstellung eines Ausführungsbeispiels einer erfindungsgemäßen Kraftwerksanlage;
- Fig. 2: eine detailliertere Darstellung der Kraftwerksanlage aus Fig. 1;
- Fig. 3: eine schematische Darstellung einer elektrischen Heizeinheit einer erfindungsgemäßen Kraftwerksanlage;
- Fig. 4: eine schematische Darstellung von wesentlichen Komponenten eines weiteren Ausführungsbeispiels einer erfindungsgemäßen Kraftwerksanlage und
- Fig. 5: eine schematische Darstellung eines Ausführungsbeispiels einer erfindungsgemäßen Kraftwerksanlage mit einem Speicherbehälter.

Gleiche und gleich wirkende Komponenten sind in den Figuren in der Regel mit denselben Bezugszeichen versehen.

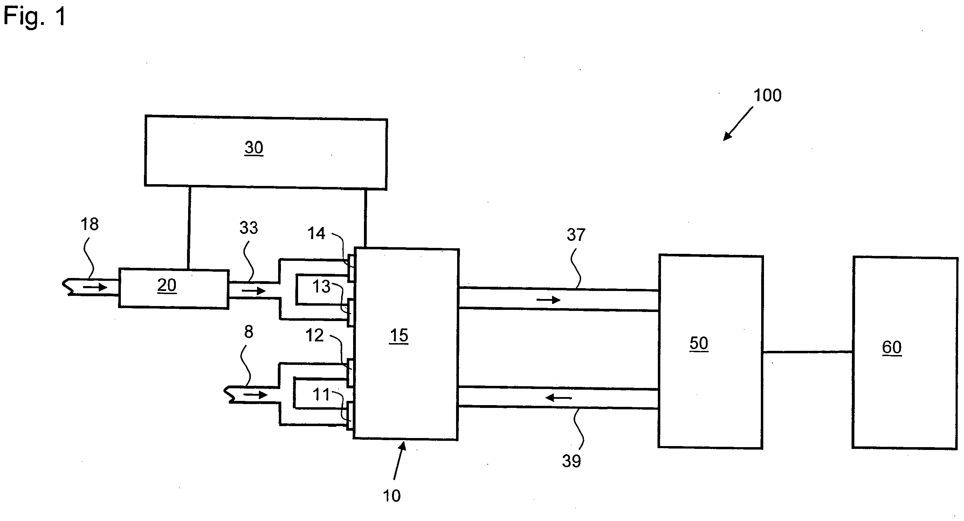

Fig. 1 zeigt schematisch ein Ausführungsbeispiel einer Kraftwerksanlage 100. Diese umfasst als wesentliche Komponenten eine Brennereinheit 10, eine Turbineneinheit 50, eine Generatoreinheit 60 und eine elektrische Heizeinheit 20.

Die Brennereinheit 10 weist eine Verbrennungskammer 15 auf. In diese kann Brennstoff über eine Zuführleitung 8 eingeleitet werden, welche zu mehreren Einlassanschlüssen 11, 12 der Verbrennungskammer 15 führt. Durch Verbrennung des Brennstoffs erhöht sich die Temperatur des Mediums in der Verbrennungskammer 15.

Das erhitzte Medium kann sodann über eine Auslassleitung 37 zu der Turbineneinheit 50 geleitet werden. Damit wird die Turbineneinheit 50 angetrieben, wobei thermische Energie des erhitzten Mediums in eine Drehbewegung von Komponenten der Turbineneinheit 50 umgewandelt wird. Durch die Drehbewegung wird in der Generatoreinheit 60 elektrischer Strom erzeugt und an ein externes Stromnetz abgegeben.

Nach Durchströmen der Turbineneinheit 50 wird das erhitzte Medium über eine Rückführleitung 39 in Richtung der Verbrennungskammer 15 zurückgeführt. Zweckmäßigerweise können hierbei weitere nicht dargestellte Komponenten durchlaufen werden, etwa ein Kondensor und eine Pumpe.

Grundsätzlich sollten die Temperatur und die Durchströmmenge des erhitzten Mediums durch die Turbineneinheit 50 in etwa gleichbleibend sein. Bei einem An- und Herunterfahren der Turbineneinheit 50 sollte eine vorgegebene maximale Änderungsrate nicht überschritten werden. Auch ist es wünschenswert, dass in der Verbrennungskammer 15 die Bedingungen zeitlich möglichst konstant sind. Das heißt, die Temperatur und Auslassmenge des erhitzten Mediums aus der Verbrennungskammer 15 sollten eine vorgegebene maximale Änderungsrate nicht überschreiten.

Bei herkömmlichen Kraftwerksanlagen kann deshalb die Brennstoffmenge, die in die Verbrennungskammer 15 eingeleitet wird, nur langsam verändert werden. Deshalb können bekannte Kraftwerksanlagen nicht oder nur kaum auf Schwankungen in der verfügbaren elektrischen Energie reagieren, die durch regenerative Energiequellen erzeugt wird. Dies führt zu einem Überangebot an elektrischer Energie, welches bisher kaum sinnvoll verwendet werden kann.

Bei der erfindungsgemäßen Kraftwerksanlage 100 kann hingegen die Brennstoffmenge, die in die Verbrennungskammer 15 eingeführt wird, zeitlich schnell verändert werden.

Dies wird mit einer elektrischen Heizeinheit 20 erreicht, welche elektrische Energie zum Erhitzen eines Mediums nutzt. Die elektrische Energie kann von einem externen Stromnetz zugeführt werden. Dadurch kann ein Überangebot an elektrischer Energie genutzt werden.

Das zu erhitzende Medium, beispielsweise Luft, wird über eine Zuführleitung 18 in die elektrische Heizeinheit 20 eingeleitet und dort erwärmt. Sodann wird das erhitzte Medium über eine Auslassleitung 33 in Richtung der Turbineneinheit 50 ausgegeben.

Eine Steuereinheit 30 kann die zugeführte Brennstoffmenge und die Heizleistung der elektrischen Heizeinheit 20, das heißt die der elektrischen Heizeinheit zugeführte elektrische Energie, abhängig voneinander steuern. Insbesondere kann die Steuereinheit 30 bei einer Reduzierung der zugeführten Brennstoffmenge die Heizleistung der elektrischen Heizeinheit erhöhen und umgekehrt. Dadurch kann die Turbineneinheit 50 mit im Wesentlichen gleichbleibenden Bedingungen betrieben werden.

Ein Erhöhen der Heizleistung der elektrischen Heizeinheit 20 kann insbesondere bei einem Überangebot an elektrischer Energie vorgesehen sein. In diesen Fällen kann elektrische Energie zu günstigen Preisen aus einem externen Stromnetz entnommen werden. Prinzipiell kann auch eine schaltbare elektrische Verbindung von der Generatoreinheit 60 zu der elektrischen Heizeinheit 20 vorgesehen sein. Gegenüber einer Stromentnahme aus einem externen Stromnetz können dadurch Leitungsverluste der elektrischen Energie besonders gering gehalten werden. Durch Nutzung des Überangebots an elektrischer Energie kann die Verbrennungsrate von Brennstoff verringert werden. Vorteilhafterweise wird dadurch Brennstoff gespart. Dadurch werden Kosten für den Brennstoff gespart und CO₂-Emissionen durch Verbrennen des Brennstoffs können verringert werden.

Bei der Ausführungsform, die in Fig. 1 dargestellt ist, führt die Auslassleitung 33 der elektrischen Heizeinheit 20 zu Einlassanschlüssen 13, 14 der Verbrennungskammer 15. Hierdurch kann in der Verbrennungskammer 15 eine verringerte Brennstoffzufuhr durch eine erhöhte Zufuhr des von der elektrischen Heizeinheit 20 erhitzten Mediums ausgeglichen werden. Vorteilhafterweise können dadurch Bedingungen, beispielsweise Druck und Temperatur in der Verbrennungskammer 15, im Wesentlichen konstant gehalten werden, wenn die zugeführte Brennstoffmenge verringert wird.

Bevorzugt sind die Einlassanschlüsse 11 bis 14 an der Verbrennungskammer 15 gleichartig gebildet. Dadurch kann eine variable Anzahl an Einlassanschlüssen mit der Zuführleitung 8 für Brennstoff und mit der Auslassleitung 33 der elektrischen Heizeinheit 20 verbunden werden. Auch können mehrere elektrische Heizeinheiten 20 angeschlossen werden.

Hierdurch wird auch erleichtert, herkömmliche Kraftwerksanlagen nachzurüsten. Dazu wird an mindestens einem der vorhandenen Einlassanschlüsse die elektrische Heizeinheit 20 angeschlossen.

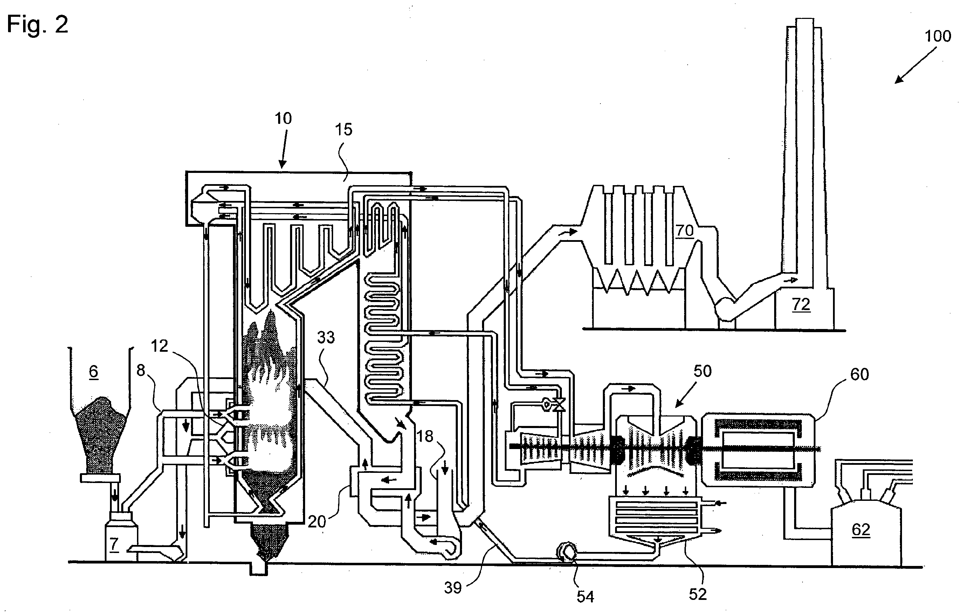

Eine detailliertere schematische Darstellung der Kraftwerksanlage 100 aus Fig. 1 ist in Fig. 2 abgebildet.

Darin ist zunächst zusätzlich ein Brennstoffspeicher 6 dargestellt. Im dargestellten Beispiel wird Kohle genutzt. Diese gelangt aus dem Brennstoffspeicher 6 in eine Mühle 7. Dort wird der Brennstoff zu Pulver gemahlen. Das Pulver wird sodann über die Zuführleitung 8 in die Verbrennungskammer 15 eingeleitet.

Weiterhin ist dargestellt, dass die Turbineneinheit 50 eine Hochdruckturbine sowie eine oder mehrere darauffolgende Niedrigdruckturbinen umfassen kann. Das erhitzte Medium, das von der Verbrennungskammer 15 kommend die Turbineneinheit 50 durchläuft, wird sodann in einen Kondensor 52 geleitet. Von dort wird das Medium über eine Pumpe 54 durch die Rückführleitung 39 zurück zur Verbrennungskammer 15 geführt.

Abgebildet ist außerdem ein Transformator 62, der die Höhe von Strom und Spannung der von der Generatoreinheit 60 gelieferten elektrischen Energie ändert.

Schließlich ist auch eine Niederschlagseinrichtung 70 gezeigt, zu welcher ein Ablass aus der Verbrennungskammer 15 führt. Hierauf folgt ein Turm 72, aus dem Abgase ausgestoßen werden.

Die elektrische Heizeinheit 20 kann prinzipiell in beliebiger Weise elektrische Energie zum Erhitzen eines Mediums nutzen. Beispielsweise kann ein resistives oder induktives Erhitzen erfolgen.

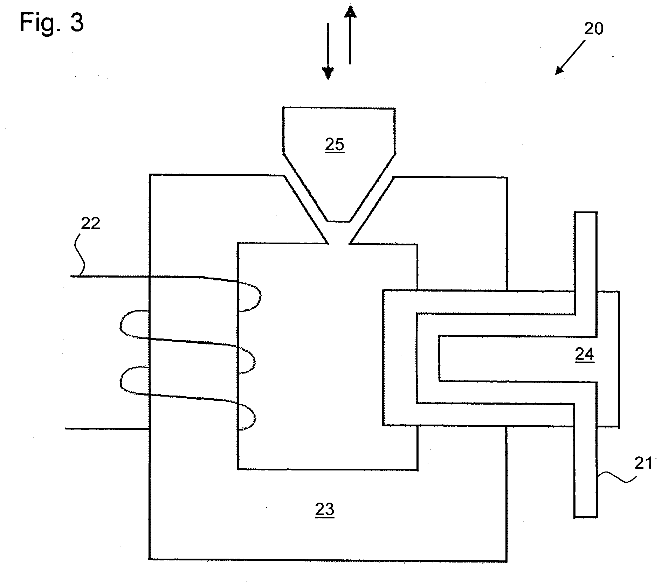

In Fig. 3 ist schematisch eine elektrische Heizeinheit 20 abgebildet, welche ein induktives Erhitzen nutzt. Diese weist zunächst eine oder mehrere Spulen 22 auf, an die eine Wechselspannung angelegt wird. Das dadurch variierende magnetische Feld wird über ein Leitmaterial 23 geführt, beispielsweise einen Eisenkern 23. Ein zu erhitzendes Medium wird durch einen Kanal 21 geleitet, welcher durch ein wärmeleitendes Material 24 führt. Durch das Magnetfeld wird in dem Material 24 ein Strom induziert und somit Wärme erzeugt, welche auf das Medium im Kanal 21 übertragen wird. Hiermit wird eine kostengünstige und schnell einstellbare Möglichkeit zur Umwandlung elektrischer Energie in thermische Energie bereitgestellt. Das schnelle Einstellen erfolgt über einen Schalter 25. Dieser kann einen Luftabstand im Leitmaterial 23 schließen, wodurch das Leitmaterial 23 einen geschlossenen Ring bildet. Dadurch erfolgt eine verstärkte Führung des Magnetfelds im Leitmaterial 23.

Alternativ oder zusätzlich kann eine elektrische Heizeinheit 20 eingesetzt werden, welche mit einer Plasmafackel gebildet ist. Hierdurch sind raumsparende Ausführungsformen möglich, mit denen hohe Temperaturen erreicht werden können. Zudem kann mit Plasmafackeln ein Anschluss an die Verbrennungskammer 15 erleichtert werden. So kann bei einer Plasmafackel die Auslassleitung 33, die in Fig. 1 dargestellt ist, entfallen. Stattdessen kann eine Plasmafackel direkt an einen der Einlassanschlüsse 13, 14 angeschlossen werden. Hierdurch können insbesondere Wärmeverluste vermieden werden und ein Nachrüsten von herkömmlichen Kraftwerksanlagen ist auch bei besonders knappem Raum möglich.

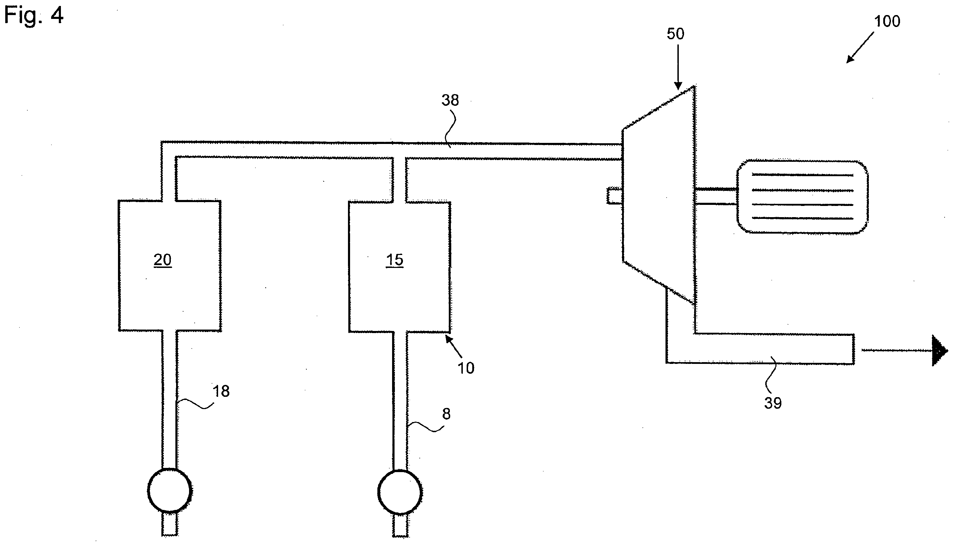

Figur 4 zeigt schematisch einen Ausschnitt eines Ausführungsbeispiels einer erfindungsgemäßen Kraftwerksanlage 100. Diese Ausführungsform ist zur Nachrüstung von herkömmlichen Kraftwerksanlagen besonders geeignet.

Die Kraftwerksanlage 100 weist zunächst eine Brennereinheit 10 mit einer Verbrennungskammer 15, einer Zuführleitung 8 und einer Auslassleitung 38 auf. Die Auslassleitung 38 führt zu einer Turbineneinheit 50, auf welche eine Rückführleitung 39, insbesondere zu der Brennereinheit 10, folgt. Diese Komponenten können wie bei einer herkömmlichen Kraftwerksanlage ausgeführt sein.

Von bekannten Kraftwerksanlagen unterscheidet sich diese Ausführungsform zumindest dadurch, dass eine elektrische Heizeinheit 20 vorhanden ist, zu welcher ein zu erhitzendes Medium über eine Zuführleitung 18 beförderbar ist. Ein besonders leichtes Nachrüsten wird dadurch erreicht, dass die Auslassleitungen der Verbrennungskammer 15 und der elektrischen Heizeinheit 20 zu einer gemeinsamen Auslassleitung 38 zusammengeführt werden. Diese führt sodann zu der Turbineneinheit 50. Vorteilhafterweise können sich Umbauten an herkömmlichen Kraftwerksanlagen im Wesentlichen auf die Gestaltung der Auslassleitung 38 als gemeinsame Auslassleitung 38 beschränken.

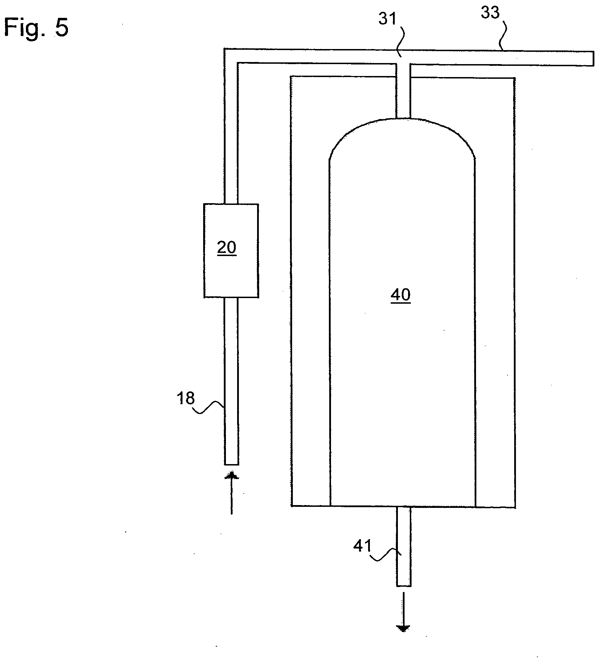

Besondere Vorteile ergeben sich, wenn das von der elektrischen Heizeinheit 20 erhitzte Medium zunächst speicherbar ist, bevor es zu der Brennereinheit oder der Turbineneinheit geleitet wird. Dies wird bei einer Ausführungsform einer erfindungsgemäßen Kraftwerksanlage erreicht, deren wesentliche Komponenten schematisch in Figur 5 gezeigt sind. Hierbei weist die Auslassleitung 33, die von der elektrischen Heizeinheit 20 zu der Brenneinheit oder der Turbineneinheit führt, einen Abzweigungspunkt 31 auf. Von dem Abzweigungspunkt 31 aus kann das von der elektrischen Heizeinheit 20 erhitzte Medium in einen Speicherbehälter 40 geleitet werden. Alternativ kann die Auslassleitung 33 auch ausschließlich zu dem Speicherbehälter 40 führen.

In dem Speicherbehälter 40 kann das erhitzte Medium aufgenommen werden und über eine weitere Auslassleitung 41 zu der Brennereinheit oder der Turbineneinheit geführt werden. Prinzipiell kann auch vorgesehen sein, dass das erhitzte Medium aus dem Speicherbehälter 40 nicht über eine weitere Auslassleitung 41 ausgegeben wird, sondern zurück zu dem Abzweigungspunkt 31.

Mit Hilfe des erhitzten Mediums im Speicherbehälter 40 kann eine Zeitspanne überbrückt werden, in welcher die Leistung der elektrischen Heizeinheit 20 heruntergefahren wird. Dies kann beispielsweise der Fall sein, wenn ein Überangebot an elektrischer Energie nicht mehr vorliegt.

Zudem wird vorteilhafterweise durch das erhitzte Medium im Speicherbehälter 40 eine Reaktionszeit verkürzt, die für einen Anstieg der Menge an erhitztem Medium erforderlich ist, die der Brennereinheit oder der Turbineneinheit zugeführt wird.

Mit der erfindungsgemäßen Kraftwerksanlage wird vorteilhafterweise ermöglicht, die Brennstoffmenge, die einer Brennereinheit zugeführt wird, besonders schnell zu variieren. Dies wird erreicht, indem zusätzliche thermische Energie von einer elektrischen Heizeinheit erzeugt wird. Damit wird insbesondere möglich, ein Überangebot an elektrischer Energie sinnvoll zu nutzen. Im Ergebnis kann dadurch die verbrannte Menge an fossilen Brennstoffen verringert werden. Als Folge werden vorteilhafterweise auch CO₂-Emissionen reduziert.

## Patentansprüche

1. Gas- oder Kohlekraftwerksanlage zur Erzeugung elektrischen Stroms und Ausgabe an ein externes Stromnetz, mit
- einer Brennereinheit (10), in welcher durch Verbrennen von Kohle oder Gas thermische Energie erzeugbar ist,
- einer Turbineneinheit (50), in welcher mit der thermischen Energie eine Drehbewegung erzeugbar ist, und
- einer Generatoreinheit (60), welche zum Erzeugen von elektrischem Strom von der Drehbewegung angetrieben ist, welcher sodann an das externe Stromnetz ausgebbar ist,
wobei zum Erzeugen der thermischen Energie zusätzlich zur Brennereinheit (10) eine elektrische Heizeinheit (20) vorgesehen ist, durch welche elektrische Energie in thermische Energie zum Antreiben der Turbineneinheit (50) wandelbar ist,
**dadurch gekennzeichnet,**
**dass** eine Steuereinheit vorgesehen und dazu eingerichtet ist,
- bei einem Überangebot an elektrischer Energie im externen Stromnetz eine Heizleistung der elektrischen Heizeinheit (20) zu erhöhen und eine Heizleistung der Brennereinheit (10) durch Verringern einer Verbrennungsrate von Kohle oder Gas herabzusetzen, wobei die elektrische Energie in thermische Energie, weiter in eine Drehbewegung und schließlich mit der Generatoreinheit (60) erneut in elektrische Energie umgewandelt wird, und
- wenn kein Überangebot an elektrischer Energie im externen Stromnetz mehr vorliegt, die Heizleistung der elektrischen Heizeinheit (20) zu verringern und die Heizleistung der Brennereinheit (10) wieder zu erhöhen.

2. Gas- oder Kohlekraftwerksanlage nach Anspruch 1,
**dadurch gekennzeichnet,**
**dass** die Steuereinheit dazu eingerichtet ist, die Heizleistungen von Heizeinheit (20) und Brennereinheit (10) so voneinander abhängig zu steuern, dass die Turbineneinheit (50) mit einer im Wesentlichen gleichbleibenden Gesamtleistung betreibbar ist.

3. Gas- oder Kohlekraftwerksanlage nach Anspruch 1 oder 2,
**dadurch gekennzeichnet,**
**dass** die Brennereinheit (10) eine Verbrennungskammer (15) zum Verbrennen der Kohle oder des Gases aufweist,
**dass** die Verbrennungskammer (15) mehrere Einlassanschlüsse (11 - 14) aufweist,
**dass** an mindestens einen der Einlassanschlüsse (11, 12) eine Zuführleitung für die Kohle oder das Gas angeschlossen ist und
**dass** über mindestens einen anderen der Einlassanschlüsse (13, 14) ein Zuführen eines von der elektrischen Heizeinheit (20) erhitzten Mediums ermöglicht ist.

4. Gas- oder Kohlekraftwerksanlage nach Anspruch 3,
**dadurch gekennzeichnet,**
**dass** die Steuereinheit dazu eingerichtet ist, die zugeführte Menge an Kohle oder Gas und die Menge des Mediums, das in der elektrischen Heizeinheit (20) erhitzt wird, so abhängig voneinander zu steuern, dass eine Temperatur in der Verbrennungskammer (15) im Wesentlichen konstant ist.

5. Gas- oder Kohlekraftwerksanlage nach Anspruch 3 oder 4,
**dadurch gekennzeichnet,**
**dass** die elektrische Heizeinheit (20) eine Plasmafackel (20) zum Erhitzen eines Mediums aufweist, über welches die Turbineneinheit (50) antreibbar ist.

6. Gas- oder Kohlekraftwerksanlage nach Anspruch 5,
**dadurch gekennzeichnet,**
**dass** die Plasmafackel (20) an einem der Einlassanschlüsse (13, 14) der Verbrennungskammer (15) angeordnet ist.

7. Gas- oder Kohlekraftwerksanlage nach einem der Ansprüche 3 bis 6,
**dadurch gekennzeichnet,**
**dass** ein Einlassanschluss (11, 12) für eine Zuführleitung (8) von Kohle oder Gas und ein Einlassanschluss (13, 14) für eine Plasmafackel (20) gleich gebildet sind.

8. Gas- oder Kohlekraftwerksanlage nach einem der Ansprüche 1 bis 7,
**dadurch gekennzeichnet,**
**dass** die elektrische Heizeinheit (20) zum Erhitzen eines Mediums Induktionsmittel (22, 23) aufweist und
**dass** mit der Steuereinheit die Induktionsmittel (22, 23) durch Verändern eines magnetischen Widerstands an den Induktionsmitteln steuerbar sind.

9. Gas- oder Kohlekraftwerksanlage nach einem der Ansprüche 1 bis 8,
**dadurch gekennzeichnet,**
**dass** ein Speicherbehälter (40) vorgesehen ist, in dem ein Medium speicherbar ist, das von der elektrischen Heizeinheit (20) erhitzt worden ist.

10. Gas- oder Kohlekraftwerksanlage nach Anspruch 9,
**dadurch gekennzeichnet,**
**dass** mit der Steuereinheit variabel einstellbar ist, ob ein erhitztes Medium von der elektrischen Heizeinheit (20) zu dem Speicherbehälter (40) oder zu der Verbrennungskammer (15) oder Turbineneinheit (50) geleitet wird.

11. Gas- oder Kohlekraftwerksanlage nach Anspruch 9 oder 10,
**dadurch gekennzeichnet,**
**dass** die Steuereinheit dazu eingerichtet ist, bei einer Reduzierung der Heizleistung der elektrischen Heizeinheit (20) unter einen vorgebbaren Schwellwert ein Weitergeben des erhitzten Mediums aus dem Speicherbehälter (40) zu veranlassen.

12. Gas- oder Kohlekraftwerksanlage nach einem der Ansprüche 1 bis 11,
**dadurch gekennzeichnet,**
**dass** die Brennereinheit (10) und die elektrische Heizeinheit (20) jeweils eine Auslassleitung aufweisen,
**dass** die beiden Auslassleitungen zu einer gemeinsamen Auslassleitung (38) miteinander verbunden sind und
**dass** die gemeinsame Auslassleitung (38) zu der Turbineneinheit (50) führt.

13. Verfahren zum Erzeugen von elektrischem Strom, insbesondere mit einer Gas- oder Kohlekraftwerksanlage nach einem der Ansprüche 1 bis 12, wobei
- in einer Brennereinheit (10) Kohle oder Gas verbrannt und thermische Energie erzeugt wird,
- in einer Turbineneinheit (50) die thermische Energie in eine Drehbewegung umgewandelt wird,
- eine Generatoreinheit (60) von der Drehbewegung angetrieben wird und hierdurch elektrischer Strom erzeugt wird, welcher an ein externes Stromnetz ausgegeben wird,
- die thermische Energie zusätzlich zur Brennereinheit (10) durch eine elektrische Heizeinheit (20) erzeugt wird, durch welche elektrische Energie in thermische Energie zum Antreiben der Turbineneinheit (50) gewandelt wird,
**dadurch gekennzeichnet,**
- **dass** bei einem Überangebot an elektrischer Energie im externen Stromnetz eine Heizleistung der elektrischen Heizeinheit (20) erhöht wird und eine Heizleistung der Brennereinheit (10) durch Verringern einer Verbrennungsrate von Kohle oder Gas herabgesetzt wird, wobei die elektrische Energie in thermische Energie, weiter in eine Drehbewegung und schließlich mit der Generatoreinheit (60) erneut in elektrische Energie umgewandelt wird, und
- **dass**, wenn kein Überangebot an elektrischer Energie im externen Stromnetz mehr vorliegt, die Heizleistung der elektrischen Heizeinheit (20) verringert wird und die Heizleistung der Brennereinheit (10) wieder erhöht wird.

## Claims

1. Gas or coal-fired power plant for generating and outputting electrical power to an external power grid, comprising
- a burner unit (10), in which thermal energy can be produced by burning coal or gas,
- a turbine unit (50), in which a rotational movement can be produced with the thermal energy, and
- a generator unit (60) which is driven by the rotational movement to generate electrical power, which can then be output to the external power grid,
wherein an electric heating unit (20) is provided in addition to the burner unit (10) in order to produce the thermal energy, wherein through the electric heating unit (20) electrical energy can be converted into thermal energy to drive the turbine unit (50),
**characterised in that**
a control unit is provided and configured to
- increase a heating power of the electric heating unit (20) and reduce a heating power of the burner unit (10) by reducing a burning rate of coal or gas in the case of an over-supply of electrical energy in the external power grid, wherein the electrical energy is converted into thermal energy, then into a rotational motion and finally again into electrical energy by means of the generator unit (60), and
- reduce the heating power of the electric heating unit (20) and increase the heating power of the burner unit (10) again if there is no longer an over-supply of electrical energy in the external power grid.

2. Gas or coal-fired power plant according to claim 1,
**characterised in that**
the control unit is configured to control the heating powers of the heating unit (20) and burner unit (10) in dependence upon each other, so that the turbine unit (50) can be operated with a substantially constant total power.

3. Gas or coal-fired power plant according to claim 1 or 2,
**characterised in that**
the burner unit (10) has a combustion chamber (15) to burn the coal or gas,
the combustion chamber (15) has a plurality of inlet ports (11 - 14), a feed line for coal or gas is connected to at least one of the inlet ports (11, 12), and
a feed of a medium heated by the electric heating unit (20) is facilitated by means of at least one other of the inlet ports (13, 14).

4. Gas or coal-fired power plant according to claim 3,
**characterised in that**
the control unit is configured to control the amount of coal or gas supplied and the amount of medium heated in the electric heating unit (20) in dependence upon each other so that a temperature in the combustion chamber (15) is substantially constant.

5. Gas or coal-fired power plant according to claim 3 or 4,
**characterised in that**
the electrical heating unit (20) comprises a plasma torch (20) to heat a medium, via which the turbine unit (50) can be driven.

6. Gas or coal-fired power plant according to claim 5,
**characterised in that**
the plasma torch (20) is arranged on one of the inlet ports (13, 14) of the combustion chamber (15).

7. Gas or coal-fired power plant according to one of the claims 3 to 6,
**characterised in that**
an inlet port (11, 12) for a feed line (8) for coal or gas and an inlet port (13, 14) for a plasma torch (20) are formed similarly.

8. Gas or coal-fired power plant according to one of the claims 1 to 7,
**characterised in that**
the electric heating unit (20) has induction means (22, 23) to heat a medium and
the induction means (22, 23) can be controlled with the control unit by changing a magnetic resistance on the induction means.

9. Gas or coal-fired power plant according to one of the claims 1 to 8,
**characterised in that**
a storage vessel (40) is provided in which a medium can be stored which has been heated by the electric heating unit (20).

10. Gas or coal-fired power plant according to claim 9,
**characterised in that**
it can be variably adjusted with the control unit whether a heated medium is conveyed from the electric heating unit (20) to the storage vessel (40) or to the combustion chamber (15) or turbine unit (50).

11. Gas or coal-fired power plant according to claim 9 or 10,
**characterised in that**
the control unit is adapted to trigger conveying of the heated medium from the storage vessel (40) in the case of a reduction in the heating power of the electric heating unit (20) below a predefinable threshold value.

12. Gas or coal-fired power plant according to one of the claims 1 to 11,
**characterised in that**
the burner unit (10) and the electric heating unit (20) respectively have an outlet line,
the two outlet lines are connected to each other to form a joint outlet line (38),
the joint outlet line (38) leads to the turbine unit (50).

13. Method for generating electrical power, in particular with a gas or coal-fired power plant according to one of the claims 1 to 12, wherein
- in a burner unit (10), coal or gas is burnt and thermal energy is produced,
- the thermal energy is converted into a rotational movement in a turbine unit (50),
- a generator unit (60) is driven by the rotational movement and electrical power is hereby produced, which is output to an external power grid,
- the thermal energy is produced in addition to the burner unit (10) by an electric heating unit (20), through which electrical energy is converted into thermal energy to drive the turbine unit (50),
**characterised in that**
- in the case of an over-supply of electrical energy in the external power grid, a heating power of the electric heating unit (20) is increased and a heating power of the burner unit (10) is reduced by reducing a burning rate of coal or gas, wherein the electrical energy is converted into thermal energy, then into a rotational motion and finally again into electrical energy by means of the generator unit (60), and
- if there is no longer an over-supply of electrical energy in the external power grid, the heating power of the electric heating unit (20) is reduced and the heating power of the burner unit (10) is increased again.

## Revendications

1. Centrale à gaz ou au charbon pour générer du courant électrique et pour livrer ledit courant électrique à un réseau électrique externe, comprenant :
- une unité de brûleur (10) dans lequel de l'énergie thermique peut être produite en brûlant du charbon ou du gaz,
- une unité de turbine (50) dans laquelle un mouvement rotatif peut être produit avec l'énergie thermique, et
- une unité de générateur (60) qui est actionnée par le mouvement rotatif pour générer du courant électrique qui peut par la suite être émis au réseau électrique externe,
tandis qu'une unité de chauffage électrique (20) est prévue en plus de l'unité de brûleur (10) afin de produire de l'énergie thermique, tandis que par le biais de l'unité de chauffage électrique (20) de l'énergie électrique peut être convertie en énergie thermique pour actionner l'unité de turbine (50),
**caractérisée en ce que**
une unité de contrôle est prévue et configurée pour
- augmenter une puissance de chauffage de l'unité de chauffage électrique (20) et réduire une puissance de chauffage de l'unité de brûleur (10) en diminuant un taux de combustion de charbon ou de gaz en cas d'apport excessif d'énergie électrique dans le réseau électrique externe, tandis que l'énergie électrique est convertie en énergie thermique puis en un mouvement rotatif et enfin de nouveau en énergie électrique par le biais de l'unité de générateur (60), et
- réduire la puissance de chauffage de l'unité de chauffage électrique (20) et augmenter la puissance de chauffage de l'unité de brûleur (10) de nouveau lorsqu'il n'y a plus d'apport excessif d'énergie électrique dans le réseau électrique externe.

2. Centrale à gaz ou au charbon selon la revendication 1
**caractérisée en ce que**
l'unité de contrôle est configurée pour contrôler les puissances de chauffage de l'unité de chauffage (20) et de l'unité de brûleur (10) de manière interdépendante de sorte que l'unité de turbine (50) puisse être mise en fonctionnement avec une puissance totale essentiellement constante.

3. Centrale à gaz ou au charbon selon la revendication 1 ou 2
**caractérisée en ce que**
l'unité de brûleur (10) possède une chambre de combustion (15) pour brûler le charbon ou le gaz,
la chambre de combustion (15) possède une pluralité d'orifices d'entrée (11 - 14),
une conduite d'alimentation en charbon ou en gaz est connectée à au moins un des orifices d'entrée (11, 12), et
une alimentation d'un milieu chauffé par l'unité de chauffage électrique (20) est rendue possible par le biais d'au moins un autre des orifices d'entrée (13, 14).

4. Centrale à gaz ou au charbon selon la revendication 3
**caractérisée en ce que**
l'unité de contrôle est configurée pour contrôler la quantité de charbon ou de gaz fournie et la quantité de milieu chauffé dans l'unité de chauffage électrique (20) en interdépendance de sorte qu'une température dans la chambre de combustion (15) soit essentiellement constante.

5. Centrale à gaz ou au charbon selon la revendication 3 ou 4
**caractérisée en ce que**
l'unité de chauffage électrique (20) possède une torche à plasma (20) pour chauffer un milieu via lequel l'unité de turbine (50) peut être actionnée.

6. Centrale à gaz ou au charbon selon la revendication 5
**caractérisée en ce que**
la torche à plasma (20) est agencée sur l'un des orifices d'entrée (13, 14) de la chambre de combustion (15).

7. Centrale à gaz ou au charbon selon une des revendications 3 à 6
**caractérisée en ce que**
un orifice d'entrée (11, 12) pour une conduite d'alimentation (8) en charbon ou en gaz et un orifice d'entrée (13, 14) pour une torche à plasma (20) sont formés de manière similaire.

8. Centrale à gaz ou au charbon selon une des revendications 1 à 7
**caractérisée en ce que**
l'unité de chauffage électrique (20) possède des moyens d'induction (22, 23) pour chauffer un milieu et
les moyens d'induction (22, 23) peuvent être contrôlés avec l'unité de contrôle en changeant une résistance magnétique au niveau des moyens d'induction.

9. Centrale à gaz ou au charbon selon une des revendications 1 à 8
**caractérisée en ce que**
un réservoir de stockage (40) est prévu, dans lequel peut être stocké un milieu ayant été chauffé par l'unité de chauffage électrique (20).

10. Centrale à gaz ou au charbon selon la revendication 9
**caractérisée en ce que**
avec l'unité de contrôle, il est possible de régler de manière variable si un milieu chauffé est conduit de l'unité de chauffage électrique (20) vers le réservoir de stockage (40) ou vers la chambre de combustion (15) ou l'unité de turbine (50).

11. Centrale à gaz ou au charbon selon la revendication 9 ou 10
**caractérisée en ce que**
l'unité de contrôle est configurée pour provoquer le transport du milieu chauffé du réservoir de stockage (40) en cas de réduction de la puissance de chauffage de l'unité de chauffage électrique (20) en dessous d'une valeur seuil pouvant être prédéfinie.

12. Centrale à gaz ou au charbon selon une des revendications 1 à 11
**caractérisée en ce que**
l'unité de brûleur (10) et l'unité de chauffage électrique (20) possèdent respectivement une conduite de sortie,
les deux conduites de sortie sont connectées l'une à l'autre pour former une conduite de sortie conjointe (38) et
la conduite de sortie conjointe (38) conduit à l'unité de turbine (50).

13. Procédé pour générer de l'énergie électrique, en particulier avec une centrale à gaz ou au charbon selon une des revendications 1 à 12, tandis que
- dans une unité de brûleur (10), du charbon ou du gaz est brûlé et de l'énergie thermique est produite,
- l'énergie thermique est convertie en un mouvement rotatif dans une unité de turbine (50),
- une unité de générateur (60) est actionnée par le mouvement rotatif et du courant électrique est ainsi produit, ledit courant électrique étant livré à un réseau électrique externe,
- l'énergie thermique est produite en plus de l'unité de brûleur (10) par une unité de chauffage électrique (20) par le biais de laquelle de l'énergie électrique est convertie en énergie thermique pour actionner l'unité de turbine (50),
**caractérisé en ce que**
- en cas d'apport excessif en énergie électrique, une puissance de chauffage de l'unité de chauffage électrique (20) dans le réseau électrique externe est augmentée et une puissance de chauffage de l'unité de brûleur (10) est réduite en diminuant un taux de combustion de charbon ou de gaz, tandis que l'énergie électrique est convertie en énergie thermique puis en un mouvement rotatif et enfin de nouveau en énergie électrique par le biais de l'unité de générateur (60), et
- lorsqu'il n'y a plus d'apport excessif en énergie électrique dans le réseau électrique externe, la puissance de chauffage de l'unité de chauffage électrique (20) est réduite et la puissance de chauffage de l'unité de brûleur (10) est augmentée de nouveau.
